## Europäisches Patentamt
## European Patent Office
## Office européen des brevets

(11) Publication number: **0 174 202**
**B1**

(12) # EUROPEAN PATENT SPECIFICATION

(45) Date of publication of patent specification: **06.02.91**

(51) Int. Cl.⁵: **B 62 D 5/04,** B 62 D 5/00

(21) Application number: **85306326.1**

(22) Date of filing: **05.09.85**

(54) **Power steering apparatus.**

(30) Priority: **05.09.84 JP 135011/84 u**
**07.09.84 JP 136424/84 u**

(43) Date of publication of application:
**12.03.86 Bulletin 86/11**

(45) Publication of the grant of the patent:
**06.02.91 Bulletin 91/06**

(84) Designated Contracting States:
**DE FR GB**

(56) References cited:
**FR-A-1 183 838**
**FR-A-2 147 475**
**FR-A-2 175 681**
**FR-A-2 263 141**

(73) Proprietor: **MITSUBISHI DENKI KABUSHIKI KAISHA
2-3, Marunouchi 2-chome Chiyoda-ku
Tokyo 100 (JP)**

(72) Inventor: **Kohge, Shinichi
727-361, Mitachi
Himeji City Hiroshima Pref. (JP)**
Inventor: **Watanabe, Tetsushi Mitsubishi Denki
Seimei Dorm.
6-30, Tsuchiyama 1-chome
Himeji City Hyogo Prefecture (JP)**
Inventor: **Ikari, Yasuki
Hanabusa Appartment 2-2-25 Ushita Minami
Higashi-ku Hiroshima 730 (JP)**
Inventor: **Morishita, Mitsuharu
1344-195, Uchikoshi
Himeji City Hyogo Prefecture (JP)**
Inventor: **Hara, Tadayuki
56-23, Saishoko
Himeji City Hyogo Prefecture (JP)**

(74) Representative: **Lawson, David Glynne et al
MARKS & CLERK 57-60 Lincoln's Inn Fields
London WC2A 3LS (GB)**

## Description

This invention relates to a power steering apparatus for an automobile or other vehicle. More particularly, it relates to a power steering apparatus having an improved mechanism for detecting when the driver of the vehicle is imparting torque to the steering wheel of the vehicle.

In a power steering apparatus for an automobile, when the driver applies torque to the steering wheel of the automobile, the steering shaft is caused to undergo an initial slight rotation. The rotation is detected by a rotation detecting mechanism, and a motor is energized in response to this initial rotation to rotate the steering shaft and decrease the force which must be exerted by the driver. Various mechanisms have been proposed for detecting the rotation of steering shafts, including those using strain gauges and induction potentiometers.

For example, Japanese Laid Open Patent Application No. 46-35779 discloses a power steering apparatus in which the torque applied to a steering shaft is detected by strain gauges disposed on a rotating shaft which is disposed in parallel to the steering shaft and which is driven by the steering shaft through gears. However, strain gauges are difficult to install and calibrate, and have the further disadvantage of being sensitive to changes in temperature.

Japanese Patent No. 1038166 discloses a power steering apparatus in which the rotation of a steering shaft produces a change in the magnetic resistance of a magnetic circuit comprising a metallic bracket mounted on the steering shaft and a stationary pole which surrounds the steering shaft. The change in magnetic resistance produces a change in the inductance between a primary coil and a secondary coil wrapped around the bracket. An alternating current is applied to the primary coil, and the change in the induced voltage in the secondary coil as a result of the change in inductance is measured to detect the rotation of the steering shaft. However, that invention has the disadvantage that the output of the secondary coil is dependent on the speed of rotation of the steering shaft and is not stable. Furthermore, the output of the secondary coil, which rotates with the steering shaft, is input to a stationary member via an output lead which is wrapped around the steering shaft. There is thus the possibility of the output lead becoming entangled with the steering shaft or other member and being severed.

FR—A—2147475 corresponding to the preamble of claim 1 describes power steering apparatus in which a potentiometer is mounted alongside the steering shaft and is driven through gears. Electrical connections extend through a rotating contact on the steering shaft. Such connections are unduly exposed.

It is an object of the present invention to overcome the above-described problems of the prior art and to provide a power steering apparatus for an automobile or other vehicle which has a mechanism for detecting when the driver is imparting torque to the steering wheel of the vehicle and for producing a corresponding electrical output which is not dependent on the speed of rotation of the steering shaft.

It is another object of the present invention to provide a power steering apparatus in which the mechanism for detecting torque is electrically connected to stationary members in a manner such that there is no fear of wires becoming entangled with the steering shaft or other parts when the steering shaft is rotated.

It is yet another object of the present invention to provide a power steering apparatus in which the mechanism for detecting torque has a very simple structure.

The present invention provides power steering apparatus comprising a rotatably supported steering shaft having an input section rotatable by a steering wheel and an output section rotatable by a steering motor in response to application of torque to the section, and a potentiometer for detecting the application of torque to the input section to control the energisation of the steering motor in response thereto, the potentiometer having respective elements arranged to rotate one with the input section and one with the output section respectively of the steering shaft for detecting the application of torque to the input section, and connecting means to connect the potentiometer to external circuitry, the connecting means comprising slip rings and brushes in sliding electrical contact with the slip rings, the brushes and slip rings being mounted respectively on the steering shaft and on a stationary member or vice versa, characterised in that the potentiometer is coaxial with the steering shaft and is accommodated internally within a hollow portion of the steering shaft.

In a power steering apparatus according to the present invention, a mechanism for detecting when a driver is imparting torque to the steering wheel of the vehicle comprises a potentiometer which is mounted in the steering shaft in a manner such that its resistance is varied when torque is applied to the steering shaft. A voltage is applied to the potentiometer, and the output of the potentiometer, which indicates the magnitude of the torque applied to the steering shaft, is preferably amplified by a preamplifier mounted on the steering shaft. The output of the preamplifier is output to stationary members outside a steering column via the slip rings mounted preferably on the steering shaft. Accordingly, the output of the torque detecting mechanism is independent of the speed of rotation of the steering shaft, and as the electrical output of the preamplifier is output via slip rings, there are no wires which can become entangled and severed by the rotation of the steering shaft.

Brief description of the drawings

Figure 1 is a longitudinal cross-sectional view of a portion of an embodiment of a power steering mechanism according to the present invention.

Figure 2 is a cross-sectional view of the embodiment of Figure 1 taken along line I—I of Figure 1.

Figure 3 is a schematic view of the connection between the preamplifier and the potentiometer of Figure 1.

In the Figures, the same reference numerals indicate the same or corresponding parts.

Description of the preferred embodiment

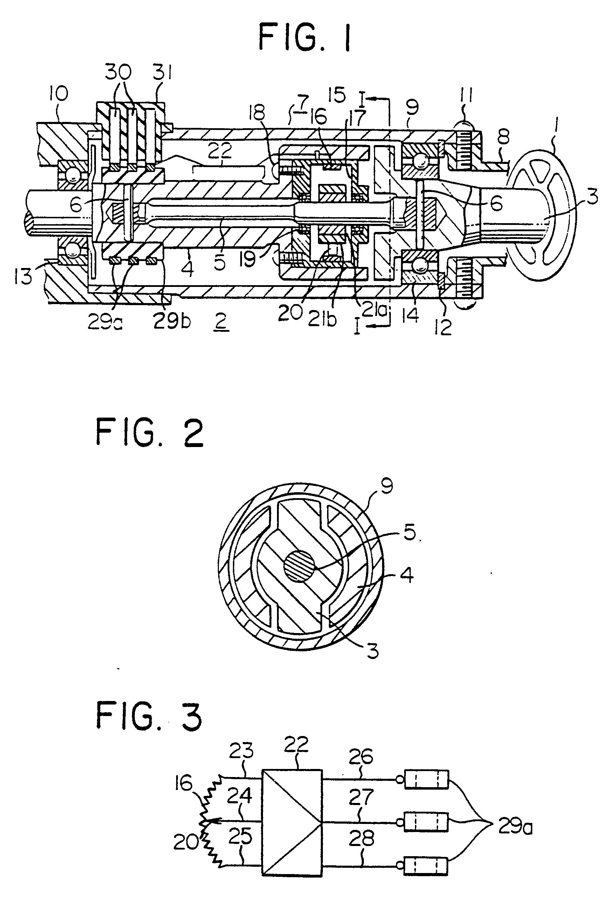

An embodiment of a power steering apparatus for an automobile according to the present invention will now be described while referring to the accompanying drawings. As shown in Figure 1, which is a longitudinal cross-sectional view of this embodiment, a steering wheel 1 is secured to one end of a rotatably supported steering shaft 2, the steering shaft 2 comprising an input section 3, an output section 4 and a torsion bar 5. The input section 3 and the output section 4 are connected with one another by the torsion bar 5, which is connected at its ends to the input section 3 and the output section 4 by pins 6, although splines or other means may be used instead. The input section 3 and the output section 4 both have hollow centers over a portion of their lengths, and the torsion bar 5 is housed within the hollow centers. As shown in Figure 2, which is a cross-sectional view taken along line I—I of Figure 1, the input section 3 and the output section 4 overlap one another in the axial direction in the portion of the apparatus near where the torsion bar 5 is connected to the input section 3. In the overlapping region, the output section 4 substantially surrounds the input section 3. A gap in the circumferential direction is provided between the input section 3 and the output section 4 in the overlapping region so that normally they will not contact one another and torque will be transmitted from one to the other via the torsion bar 5. However, if the twisting of the torsion bar 5 due to the torque applied thereto exceeds a certain value, the input section 3 and the output section 4 will contact one another, and torque will be directly transmitted from the one to the other, preventing excessive torsional stresses from developing in the torsion bar 5.

The steering shaft 2 is rotatably supported by a steering column 7 which is secured to the chassis of the automobile. The steering column 7 comprises a first cylindrical portion 8, a second cylindrical portion 9 and a third cylindrical portion 10. The first cylindrical portion 8 is secured to the second cylindrical portion 9 by bolts 11, and the second cylindrical portion 9 is press fit into the third cylindrical portion 10 so that all three portions are coaxially disposed.

The second cylindrical portion 9 has a ball bearing 14 secured to its inner periphery which journals the input section 3 of the steering shaft 2, while the third cylindrical portion 10 has a ball bearing 13 which journals the output section 4. A retaining ring 12 is disposed in the second cylindrical portion 9 adjacent to the ball bearing 14.

The output section 4 of the steering shaft 2 is connected to an unillustrated wheel drive portion in a conventional manner so that the rotation of the output section 4 will change the direction in which the wheels of the automobile point. Furthermore, an unillustrated motor is connected to the output section 4 so that when the motor is driven it will rotate the output section 4 and the force required to turn the steering wheel 1 will be lessened.

A mechanism for detecting the application of torque to the steering wheel 1 comprises a potentiometer 15 and a preamplifier 22. The potentiometer 15 is disposed around the torsion bar 5 near the end which is connected to the input section 3. The potentiometer 15 comprises a resistive element 16 having an annular shape which is secured to the inside surface of a cylindrical frame 17 which in turn is secured to the output section 4 by screws 18 so as to rotate therewith. The frame 17 is rotatably supported by ball bearings 19 mounted on the torsion bar 5. The wiper arm 20 of the potentiometer 15 is rigidly mounted on a supporting ring 21 comprising an electrically insulating ring 21a which is rigidly secured to the outer surface of the torsion bar 5 and an electrically conducting ring 21b which surrounds and is rigidly secured to the electrically insulating ring 21a. One end of the wiper arm 20 is secured to the electrically conducting ring 21b, and the other end is in electrically and sliding contact with the resistive element 16 so that the wiper arm 20 and the resistive element 16 can rotate with respect to one another while still maintaining electrical contact when the torsion bar 5 rotates with respect to the output section 4. It is also possible to structure the potentiometer 15 so that the resistive element 16 is mounted on the torsion bar 5 and the wiper arm 20 is mounted on the output section 4.

The preamplifier 22 is rigidly mounted on the output section 4 so as to rotate therewith and is electrically connected to the potentiometer 15 and to three slip rings 29a which are mounted in an electrically insulating support ring 29b which is rigidly secured to the outer surface of the output section 4. The slip rings 29a enable power to be supplied to the preamplifier 22 and enable its output to be removed to the outside of the steering column 7. As shown in Figure 3, the preamplifier 22 has threes input leads 23—25 and three output leads 26—28. The three output leads 26—28 are connected to the three slip rings 29a. Two of the input leads 23 and 25 are connected to opposite ends of the resistive element 16, while the other input lead 24 is electrically connected to the wiper arm 20 via an unillustrated brush which is in electrical and sliding contact with the electrically conducting ring 21b. The electrical output from the preamplifier 22 is passed to a stationary member outside the steering column 7 via the slip rings 29a which are in sliding contact with three brushes 30 mounted in a brush holder 31 which is rigidly secured to the steering column 7. The brushes 30 are electrically connected to an unillustrated conventional control mechanism for controlling the previously-mentioned motor of the apparatus.

The operation of this apparatus is as follows. When a driver turns the steering wheel 1, the input section 3 of the steering shaft 2 will rotate with respect to the output section 4 and a torsional moment will be applied to the torsion bar 5, causing it to twist by a small angle. The twisting of the torsion bar 5 will cause the wiper arm 20 mounted on the torsion bar 5 to rotate with respect to the resistive element 16, changing the resistance between the input leads of the preamplifier 22 and changing the voltage at input lead 24. The preamplifier 22 produces an output signal having a current corresponding to the output voltage of input lead 24, and this output signal is output via the slip rings 29a to the previously-mentioned conventional control mechanism. Based on the magnitude of the output signal, the control mechanism controls the operation of the motor so as to rotate the output section 4 of the steering shaft 2 and decrease the steering force required by the driver.

The magnitude of the output signal from the preamplifier 22 is dependent only upon the amount of rotation of the wiper arm 20 with respect to the resistive element 16 and does not depend on the speed of rotation. Therefore, a stable electrical output can be obtained from the preamplifier 22 at all times. Furthermore, as the only connecting wires are the input and output leads connecting the preamplifier 22 with the potentiometer 15 and the slip rings 29a, and since these wires rotate with the output section 4, there are no wires which can become entangled with the steering shaft 2 when it rotates, and there is no possibility of these wires being broken.

During normal operation, the motor acts to rotate the output section 4 of the steering shaft 2 as soon as the rotation of the input section 3 is detected. Accordingly, the angle of twist of the torsion bar 5 is normally quite small and a large torque is not applied to it. However, if the motor or other portion should fail so that the steering force must be applied entirely by hand, the angle of twist between the input section 3 and the output section 4 will increase. As the input section 3 and the output section 4 overlap one another as shown in Figure 2, they will contact one another when the angle of twist reaches a certain value, and torque will be transmitted directly from the input section 3 to the output section 4. Therefore, there is no possibility of the torsion bar 5 being overstressed during manual operation.

In the above embodiment, although the torsion bar 5 is shown as being disposed inside the output section 4, it can also be a cylindrical member which surrounds the output section 4.

Power steering apparatus incorporating a torque-detecting device embodying the present invention is described in our copending European Patent Application number 85306327.9.

## Claims

1. Power steering apparatus comprising a rotatably supported steering shaft (2) having an input section (3) rotatable by a steering wheel (1) and an output section (4) rotatable by a steering motor in response to application of torque to the input section, and a potentiometer (15) for detecting the application of torque to the input section to control the energisation of the steering motor in response thereto, the potentiometer (15) having respective elements (16, 20) arranged to rotate one with the input section and one with the output section respectively of the steering shaft for detecting the application of torque to the input section, and connecting means to connect the potentiometer to external circuitry, the connecting means comprising slip rings (29a) and brushes (30) in sliding electrical contact with the slip rings, the brushes and slip rings being mounted respectively on the steering shaft and on a stationary member or vice versa, characterised in that the potentiometer (15) is coaxial with the steering shaft (2) and is accommodated internally within a hollow portion of the steering shaft.

2. Power steering apparatus as claimed in claim 1 in which the said hollow portion is a portion of the output section.

3. Power steering apparatus according to claim 1 or 2, characterised in that a torsion bar (5) interconnects the input section and output section of the steering shaft, and one element (16 or 20) of the potentiometer is secured to the torsion bar adjacent the said input section.

4. A power steering apparatus according to claim 1 or 2, characterised in that a torsion bar (5) is connected between said input section (3) and said output section (4) and is disposed coaxially therewith, the steering wheel being rigidly secured to the end of said input section opposite to said torsion bar;

the said potentiometer (15) comprises a generally annular resistive element (16) and a wiper arm (20) which is in electrical and sliding contact with said resistive element, one of which is secured to said output section and the other of which is secured to said torsion bar so that when said torsion bar is rotated with respect to said output section, said wiper arm will move with respect to said resistive element while maintaining electrical contact;

three slip rings (29a) are secured to the outer periphery of said output section, two of which are electrically connected to said resistive element and the third of which is electrically connected to said wiper arm; and

stationary brushes (30) are in sliding electrical contact with said slip rings.

5. A power steering apparatus as claimed in claim 1, 2, 3 or 4, characterised in that a preamplifier (22) is electrically connected between said connecting means (29a, 30) and said potentiometer.

6. A power steering apparatus as claimed in claim 5, characterised in that the preamplifier (22) is mounted on the said output section (4) of the steering shaft.

**Patentansprüche**

1. Servolenkung, umfassend eine drehbar gelagerte Lenkwelle (2) mit einem durch ein Lenkrad (1) drehbaren Eingangsbereich (3) und mit einem durch einen Lenkmotor in Abhängigkeit vom Aufbringen einer Drehkraft auf den Eingangsbereich drehbaren Ausgangsbereich (4), und ein Potentiometer (15), welches das Aufbringen von Drehkraft auf den Eingangsbereich erfaßt und in Abhängigkeit davon die Aktivierung des Lenkmotors regelt, wobei das Potentiometer (15) Elemente (16, 20) aufweist, die so angeordnet sind, daß sich das eine mit dem Eingangsbereich und das andere mit dem Abtriebsbereich der Lenkwelle dreht, um das Aufbringen von Drehkraft auf den Eingangsbereich zu erfassen, und eine Verbindungseinrichtung, die das Potentiometer mit einem externen Schaltkreis verbindet, wobei die Verbindungseinrichtung Schleifringe (29a) und Bürsten (30) in elektrischem Gleitkontakt mit den Schleifringen aufweist und die Bürsten und Schleifringe jeweils an der Lenkwelle bzw. an einem ortsfesten Teil oder umgekehrt befestigt sind, dadurch gekennzeichnet, daß das Potentiometer (15) mit der Lenkwelle (2) koaxial angeordnet und innerhalb eines hohlen Bereiches der Lenkwelle aufgenommen ist.

2. Servolenkung nach Anspruch 1, wobei der hohle Bereich ein Teil des Ausgangsbereiches ist.

3. Servolenkung nach Anspruch 1 oder 2, dadurch gekennzeichnet, daß eine Torsionsfeder (5) den Eingangsbereich und den Ausgangsbereich der Lenkwelle miteinander verbindet und daß ein Element (16 oder 20) des Potentiometers an den Eingangsbereich angrenzend an der Torsionsfeder befestigt ist.

4. Servolenkung nach Anspruch 1 oder 2, dadurch gekennzeichnet, daß eine Torsions feder (5) zwischen dem Eingangsbereich (3) und dem Ausgangsbereich (4) in Verbindung mit beiden vorgesehen und koaxial zu ihnen angeordnet ist, wobei das Lenkrad an dem der Torsionsfeder entgegengesetzten Ende des Ausgangsbereiches starr befestigt ist;

daß das Potentiometer (15) ein im allgemeinen ringförmiges Widerstandselement (16) und einen Schleifarm (20) aufweist, der mit dem Widerstandselement in elektrischem und in Gleitkontakt steht, wobei das eine dieser Elemente am Ausgangsbereich und das andere an der Torsionsfeder befestigt ist, so daß beim Verdrehen der Torsionsfeder relativ zum Ausgangsbereich der Schleifarm sich relativ zum Widerstandselement unter Aufrechterhaltung des elektrischen Kontaktes bewegt;

daß drei Schleifringe (29a) am Außenumfang des Ausgangsbereiches befestigt sind, von denen zwei mit dem Widerstandselement elektrisch verbunden sind und der dritte mit dem Schleifarm elektrisch verbunden ist; und

daß ortsfeste Bürsten (30) mit den Schleifringen in elektrischem Gleitkontakt liegen.

5. Servolenkung nach Anspruch 1, 2, 3 oder 4, dadurch gekennzeichnet, daß ein Vorverstärker (22) elektrisch zwischen die Verbindungseinrichtung (29a, 30) und das Potentiometer geschaltet ist.

6. Servolenkung nach Anspruch 5, dadurch gekennzeichnet, daß der Vorverstärker (22) am Ausgangsbereich (4) der Lenkwelle befestigt ist.

**Revendications**

1. Appareil de direction assistée comprenant un arbre de direction (2) monté pivotant et ayant une section d'entrée (3) pouvant pivoter avec un volant de direction (1), et une section de sortie (4) pouvant pivoter à l'aide d'un moteur de braquage, en réponse à l'application d'un couple à la section d'entrée, et un potentiomètre (15) afin de détecter l'application du couple à la section d'entrée de manière à contrôler la mise en marche du moteur de braquage en réponse à celui-ci, le potentiomètre (15) ayant des éléments respectifs (16, 20) disposés pour tourner l'un avec la section d'entrée et l'autre avec la section de sortie, respectivement de l'arbre de direction pour la détection du couple appliqué à la section d'entrée, et des moyens de connexion afin de connecter le potentiomètre à un circuit externe, les moyens de connexion comprenant des bagues coulissantes (29a) et des balais (30) en contact électrique mobile avec les bagues coulissantes, les balais et les bagues couilissantes étant montés respectivement sur l'arbre de direction et sur un organe stationnaire, ou vice-versa, caractérisé en ce que le potentiomètre (15) est coaxial à l'arbre de direction (2) et est logé de façon interne à l'intérieur d'une portion creuse de l'arbre de direction.

2. Appareil de direction assistée selon la revendication 1, dans lequel ladite portion creuse est une portion de l'arbre de sortie.

3. Appareil de direction assistée selon la revendication 1 ou 2, caractérisé en ce qu'une barre de torsion (5) raccorde la section d'entrée et la section de sortie de l'arbre de direction, et un élément (16 ou 20) du potentiomètre est fixé à la barre de torsion à proximité de ladite section d'entrée.

4. Appareil de direction assistée en accord avec la revendication 1 ou 2, caractérisé en ce que la barre de torsion (5) est connectée entre ladite section d'entrée (3) et à ladite section de sortie (4) et est disposée coaxialement à celle-ci, le volant de direction étant fixé de façon rigide à l'extrémité de ladite section d'entrée à l'opposé de ladite barre de torsion;

ledit potentiomètre (15) comprenant un élément résistant (16) généralement annulaire et un bras excentrique (20) qui est en contact électrique et mobile avec ledit élément résistant, l'un de ceux-ci étant fixé à ladite section de sortie et l'autre étant fixé à ladite barre de torsion de sorte que lorsque ladite barre de tension est entraînée en rotation par rapport à ladite section de sortie, ledit bras excentrique se déplace par rapport audit élément résistant alors que le contact électrique est maintenu;

Trois bagues coulissantes (29a) sont fixées à la périphérie externe de ladite section de sortie, deux de celles-ci sont électriquement connectées audit élément résistant, et la troisième de celles-ci est connectée électriquement au bras excentrique; et

les balais stationnaires (30) sont en contact électrique mobile avec lesdites bagues coulissantes.

5. Appareil de direction assistée selon la revendication 1, 2, 3 ou 4, caractérisé en ce qu'un préamplificateur (22) est connecté électriquement entre ledit moyen de connexion (29a, 30) et ledit potentiomètre.

6. Appareil de direction assistée selon la revendication 5, caractérisé en ce que le préamplificateur (22) est monté sur ladite section de sortie (4) de l'arbre de direction.

# FIG. 1

# FIG. 2

# FIG. 3